(19) Europäisches Patentamt

European Patent Office

Office européen des brevets

(11) **EP 0 633 223 B1**

(12) **EUROPÄISCHE PATENTSCHRIFT**

(45) Veröffentlichungstag und Bekanntmachung des Hinweises auf die Patenterteilung:
**19.03.1997 Patentblatt 1997/12**

(51) Int. Cl.$^6$: **C01G 53/00**, C01G 53/04, H01M 4/52, H01M 4/48

(21) Anmeldenummer: **94109816.2**

(22) Anmeldetag: **24.06.1994**

(54) **Mangan(III)-haltiges Nickel(II)-hydroxid für die Herstellung von Sekundärbatterien**

Manganese(III) containing nickel(II) hydroxide for the preparation of secondary batteries

Hydroxide de nickel(II) contenant du manganèse III pour la production de batteries secondaires

(84) Benannte Vertragsstaaten:
**BE CH DE DK ES FR GB IT LI NL PT SE**

(30) Priorität: **09.07.1993 DE 4323007**

(43) Veröffentlichungstag der Anmeldung:
**11.01.1995 Patentblatt 1995/02**

(73) Patentinhaber: **H.C. Starck GmbH & Co. KG**
**D-38642 Goslar (DE)**

(72) Erfinder:
- **Glemser, Oskar, Prof. Dr.**
**D-37085 Göttingen (DE)**
- **Axmann, Peter, Dipl.-Chem.**
**D-37085 Göttingen (DE)**

(74) Vertreter: **Steiling, Lothar, Dr. et al**
**Bayer AG**
**Konzernzentrale RP**
**Patente Konzern**
**51368 Leverkusen (DE)**

(56) Entgegenhaltungen:
FR-A- 2 356 286

- **PATENT ABSTRACTS OF JAPAN vol. 17, no. 340 (E-1389) 28. Juni 1993 & JP-A-05 047 380 (FURUKAWA BATTERY CO)**
- **DATABASE WPI Derwent Publications Ltd., London, GB; AN 77-26261Y & JP-A-52 028 628 (TOKYO SHIBAURA LEC)**
- **CHEMICAL ABSTRACTS, vol. 90, no. 18, 30. April 1979, Columbus, Ohio, US; abstract no. 143554c, OHSAKI Seite 377 ; & JP-A-54 004 334 (TOKYO SHIBAURA ELECTRIC)**
- **CHEMICAL ABSTRACTS, vol. 101, no. 8, 20. August 1984, Columbus, Ohio, US; abstract no. 62520g, TROLLUND Seite 464 ; & CONTRB. CIENT. TECNOL., Bd.14, Nr.65, 1984 Seiten 17 - 27**
- **PATENT ABSTRACTS OF JAPAN vol. 17, no. 340 (E-1389) 28. Juni 1993 & JP-A-05 047 380**
- **DATABASE WPI Derwent Publications Ltd., London, GB; AN 77-26261Y & JP-A-52 028 628**
- **CHEMICAL ABSTRACTS, vol. 90, no. 18, 30. April 1979, Columbus, Ohio, US; abstract no. 143554c, OHSAKI Seite 377 ;& JP-A-7904334**

**Beschreibung**

Die vorliegende Erfindung betrifft Mangan(III)-haltiges Nickel(II)-Hydroxid, ein Verfahren zu seiner Herstellung sowie seine Verwendung als Elektrodenmaterial für Sekundärbatterien.

Nickel(II)hydroxid wird im alkalischen Akkumulator als positive Elektrodenmasse verwendet. Veränderungen bestimmter elektrochemischer Eigenschaften werden durch Einbau verschiedener Fremdionen erzielt.

Der Einbau von Manganionen in Nickel(II)hydroxid ist nur in wenigen Veröffentlichungen beschrieben. Ein Grund hierfür liegt darin, daß das zweiwertige Mangan im $\beta$-Mn(OH)$_2$ oder im Mischhydroxid mit Nickel schon durch Luftsauerstoff sehr leicht oxidiert wird und das Mangan im Endprodukt in keinem definierten Oxidationszustand vorliegt. Die Darstellung einheitlicher Produkte ist dadurch erschwert.

Aus der Literatur sind einige Hinweise auf die Eigenschaften der Mangan-dotierten Nickelhydroxid-Elektroden bekannt:

J.P. Harivel, B. Morignat, J. Labat, J.F. Laurent, Power Sources 1966, Pergamon Press, Ed. by D. H. Collins, S. 239, dotierten Nickel(II)hydroxid mit Mn$^{2+}$ bzw. Mn$^{4+}$ durch Copräzipitation aus Natronlauge. Die dotierten Hydroxide zeigten im Vergleich zu reinem Nickelhydroxid keine Verbesserungen der elektrochemischen Eigenschaften.

Die Auswirkung von mangan- und/oder eisendotierten Nickelhydroxiden auf die Verwendungsmöglichkeit als Sauerstoffelektroden untersuchten Cordoba et al. (S.I. Cordoba, M. Lopez Teijelo, V.A. Macagno, Electrochimica Acta $\underline{32}$ (1987), 1783, S.I. Cordoba, R.E. Carbonio, M. Lopez Teijelo, V.A. Macagno, Electrochimica Acta $\underline{31}$ (1986), 1321). Die Materialien wurden hierbei ebenfalls durch Copräzipitation oder aber durch schichtweise Abscheidung der reinen Hydroxide übereinander dargestellt.

D.A. Corrigan, R.M. Bendert, J. Electrochem. Soc. $\underline{136}$ (1989), 723 und D. Bélanger, G. Laperrière, J. Electrochem. Soc. $\underline{137}$ (1990), 2355 führten cyclovoltammetrische Untersuchungen an kathodisch abgeschiedenen dünnen Schichten von u.a. Mn$^{2+}$-dotiertem Nickelhydroxid durch.

Aus JP-A-7 904 334 entsprechend Chemical Abstract 90: 143554c geht ein Nickelhydroxidmaterial hervor, welches durch Zusatz von Mn, Ag, Co oder deren Verbindungen und anschließende Oxidation mit O$_3$ erhalten wurde. Es handelt sich lediglich um einen Zusatz, bei dem kein Austausch von Ni$^{2+}$-Ionen mit den zugesetzten Verbindungen stattfindet. Die heterogen vorliegenden Additive verbessern die chemische Oxidation des in separater Phase vorliegenden Nickelhydroxids.

Praktische Folgerungen sind jedoch aus dem genannten Schrifttum im Hinblick auf die Verbesserung der Eigenschaften und/oder Verwendung dieser Materialien in Sekundärbatterien nicht herzuleiten.

Die aus dem Stand der Technik bekannten Mangan-dotierten Nickelhydroxid-Materialien, wie sie für die Herstellung von Elektroden für Sekundärbatterien bisher verwendet wurden, weisen also keinen wesentlichen Vorteil gegenüber undotiertem Material auf.

Es war nun die Aufgabe der Erfindung, die Eigenschaften von Mangan-dotierten Nickelhydroxid-Pulver für die Herstellung von Batterie-Elektroden so zu verbessern, daß einerseits die Kapazität der Nickelhydroxid-Elektroden erhöht und die Zyklenstabilität verbessert wird.

Es wurde nun überraschenderweise gefunden, daß Mangan als Zusatz zu Nickelhydroxid dann eine besonders positive Wirkung in der Nickelhydroxid-elektrode verursacht, wenn es überwiegend in der 3-wertigen Oxidationsstufe in der Nickelhydroxid-elektrode vorliegt.

Gegenstand dieser Erfindung sind somit Mangan-haltige Nickel(II)hydroxid-Pulver, in denen mehr als 50 Mol.-% des Mangans in der 3-wertigen Oxidationsstufe vorliegen und das 3-wertige Mangan im Ni(OH)$_2$-Gitter eingebaut ist. Bevorzugte Ausführungsformen der Erfindung ergeben sich aus den Unteransprüchen. Ein bedeutender wirtschaftlicher Nebeneffekt der Erfindung besteht darin, daß der Ersatz des relativ teuren Nickels durch einen entsprechenden - preisgünstigeren - Mangan-Anteil ermöglicht und damit eine höhere Massenausnutzung des Nickelhydroxids erreicht wird.

Erfindungsgemäße Nickel-Mangan-Elektroden zeigen im Vergleich zu undotierten Vergleichsprodukten eine wesentlich höhere Ausnutzung des Ein-Elektrodenschritts

$$Ni^{2+} \rightarrow Ni^{3+}$$

und zusätzlich eine verbesserte Zyklenstabilität.

Die Dotierung erfolgt durch den Ersatz von Ni$^{2+}$-Ionen im Kristallgitter des Nickelhydroxids durch Mn$^{3+}$-Ionen. Das Mn$^{3+}$-Ion erweist sich dabei aufgrund des Radienverhältnisses Ni$^{2+}$/Mn$^{3+}$ = 1.05 als sehr geeignet.

Die Copräzipitation der Mangan(II)-Verbindung mit dem Nickelhydroxid erfolgt durch Eintropfen einer angesäuerten Metallsalzlösung, die Ni$^{2+}$- und Mn$^{3+}$-Ionen enthält, in eine Vorlage von konstantem pH-Wert. Während das Ni$^{2+}$-Ion in Form seiner Salze eingesetzt werden kann, wird das Mn$^{3+}$-Ion in der Salzlösung durch Reaktion von Mn$^{2+}$-Ionen mit entsprechenden Mengen MnO$_4^-$-Ionen hergestellt. Dieses wird durch kontinuierliche Vereinigung der entsprechenden Lösungen in einer Mischkammer erreicht. Hierbei können beide Lösungen schon Nickel(II)-Salze enthalten. Auch eine nachträgliche Vermischung Mn$^{3+}$- mit einer Ni$^{2+}$-Lösung ist möglich.

Die Bildung des $Mn^{3+}$-Ions erfolgt nach der Gleichung:

$$4Mn^{2+} + MnO_4^- + 8H^+ \rightarrow 5\,Mn^{3+} + 4H_2O$$

Der mittlere Oxidationsgrad des Manganions in der Nickelhydroxidmatrix kann gezielt durch einen entsprechenden Überschuß an $Mn^{2+}$- oder $MnO_4$-Ionen variiert werden.

Dreiwertiges Mangan ist in Lösung sehr instabil. Es disproportioniert in wäßriger Lösung schnell unter Bildung von Mangan(II)- und Mangan (IV)-Aquoxiden. Läuft dieser Prozeß schon in dere Salzlösung ab, so kann das Mangan nicht mehr in das Nickelhydroxidgitter eingebaut werden und es fallen im Präzipitationsschritt separate Phasen von Manganaquoxiden neben Nickelhydroxid aus.

Um den Einbau des Mangans in die Wirtsmatrix zu erreichen, muß diese Disproportionierung unterbunden werden. Aus der Literatur ist hinreichend bekannt, daß das $Mn^{3+}$-Ion in Gegenwart geeigneter Anionen (z.B. Sulfat, Phosphat, Acetat u.a.) kurzzeitig stabilisiert werden kann. Daher ist es für die Herstellung des Fällungsproduktes wichtig, daß in der vereinigten Salzlösung ausreichende Mengen stabilisierender Anionen bzw. deren Gemische vorhanden sind, um eine vorzeitige Abreaktion der $Mn^{3+}$-Ionen zu unterbinden. Hierbei hängt die Lebensdauer des $Mn^{3+}$ von der Art der Anionen, ihrer Konzentration in der Lösung und deren pH-Wert ab. Nach ihr muß auch die Länge der Reaktionszone bemessen werden:

Eine zu kurze Reaktionszone kann zu einer ungenügenden Durchmischung der Reaktionslösung oder einer unvollständigen Reaktion führen, die Produkte werden uneinheitlich.

Ist die Reaktionszone zu lang, so zersetzen sich die $Mn^{3+}$-Ionen vorzeitig, was ihren Einbau ins $Ni(OH)_2$ verhindert. Die Fällung des $Ni^{2+}/Mn^{3+}$-Mischhydroxids erfolgt schließlich durch Eintropfen der $Ni^{2+}$ und stabilisiertes $Mn^{3+}$ enthaltenden sauren Salzlösung in eine alkalische Vorlage konstanten pH-Werts. Nach der Fällung ist das $Mn^{3+}$ als solches im $Ni(OH)_2$ Gitter fixiert, eine Disproportionierung kann nicht mehr stattfinden.

Im folgenden wird die Erfindung beispielhaft erläutert, ohne daß hierin eine Einschränkung zu sehen ist.

**Beispiel 1:**

| Lösung A: | 10.04 g (0.04 mol) $Mn(NO_3)_2$ x $4H_2O$ |
|---|---|
| | 58.16 g(0.20 mol) $Ni(NO_3)_2$ x $6H_2O$ |
| | 12.50 g $H_2SO_4$ 97 % |
| | 10.00 g HAc 99 % |
| | 10.00 g $H_3PO_4$ 85 % |
| | $H_2$ ad 250 ml |
| Lösung B: | 1.58 g (0.01 mol) $KMnO_4$ |
| | 12.50 g $H_2SO_4$ 97 % |
| | 10.00 g HAc 99 % |
| | 10.00 g $H_3PO_4$ 85 % |
| | $H_2O$ ad 250 ml |
| Korrekturlauge: | 250 ml KOH, c = 3.526 mol/l |
| Vorlage: | 1000 ml KOH mit pH 12.50 = 0.02 |
| | T = 33 ± 2°C |

**Beispiel 2:**

| Lösung A: | 12.55 g (0,050 mol) $Mn(NO_3)_2$ x $4H_2O$ |
|---|---|
| | 54.53 g (0,188 mol) $Ni(NO_3)_2$ x $6H_2O$ |
| | 12.50 g $H_2SO_4$ 97 % |
| | 10.00 g HAc 99 % |
| | 10.00 g $H_3PO_4$ 85 % |
| | $H_2O$ ad 250 ml |
| Lösung B: | 1.98 g (0,0125 mol) $KMnO_4$ |
| | 12.50 g $H_2SO_4$ 97 % |
| | 10.00 g HAc 99 % |
| | 10.00 g $H_3PO_4$ 85 % |
| | $H_2O$ ad 250ml |
| Korrekturlauge: | 500 ml 3,5 m KOH |
| Vorlage: | 1000 ml KOH mit pH 12.50 ± 0,02 |

Durchführung des Verfahrens:

Die Lösungen A und B wurden jeweils mit Hilfe separater Pumpen bei gleichem Volumendurchsatz (100 ml/h) kontinuierlich über eine Y-förmige Mischkammer zusammengeführt. die Bildung des $Mn^{3+}$ kann hierbei räumlich getrennt in der sich anschließenden Reaktionszone (Glasrohr) verfolgt werden. Der Farbübergang verläuft von violett ($MnO_4^-$) nach rot ($Mn^{3+}$ in Gegenwart von $Ni^{2+}$).

Nach einer konstanten Gesamtreaktionszeit von ca. 20 sec. tropfte die Lösung in eine Vorlage von KOH, deren pH-Wert mit Hilfe einer Glaselektrode kontolliert und über Zugabe von Korrekturlauge konstant gehalten wurde (pH 12.50 ± 0,02). Auf diese Weise waren sowohl der Reaktionszustand des $Mn^{3+}$ zum Fällungszeitpunkt als auch der Fällungsvorgang selbst stets einheitlich und kontrollierbar.

Das braunrote Produkt wurde nach 15 h Alterung abzentrifugiert und 5-mal mit je 650 ml Lauge vom pH-Wert 12.50 gewaschen, anschließend im Vakuum bei 51°C drei Tage lang getrocknet.

Das Produkt zeigte ein charakteristisches Röntgenspektrum. Zur genaueren Kennzeichnung wurden für Beispiel 1 die genauen Analysendaten ermittelt:

Chemische Analysen:

| (Beispiel 1) | Element/Anion | Mittelwert [%] | Molares Verhältnis N |
|---|---|---|---|
| | Ni | 46.67 | 4.00 |
| | Mn | 10.87 | 1.00 |
| | H | 2.55 | 12.83 |
| | $MnO_2$ | 9.27 | 0.54 |
| | $SO_4^{2-}$ | < 1 | < |
| | $PO_4^{3+}$ | 1.54 | 0.08 |
| C un N | außerhalb des Eichbereichs | | |

Oxidationsgrad des Mangans:

$$x \text{ in } MnO_x \quad x = \left\{ 1 + \left( \frac{N_{MnO_2}}{N_{Mn\,ges}} \right) \right\}$$

x = 1.54
Es liegt $Mn^{3,08}$ vor.

Anteil des substituierten Nickels:

A) Bezogen auf die molaren Verhältnisse Ni/Mn beträgt die Nickeleinsparung 20 mol%.
B) Aus dem Vergleich des analytischen Ni-Gehalt für reines Nickelhydroxid (62 %) und für das dotierte Produkt (46 %) ergibt sich eine massenbezogene Nickeleinsparung von 26 %.

2. Untersuchung des Zyklenverhaltens:

Zur Überprüfung der elektrochemischen Eigenschaften des aktiven Materials wurden galvanostatische Ladungen und Entladungen vs Cd/Cd(OH)$_2$ bzw. Hg/HgO durchgeführt. Die Elektrode wurde als Pellet aus 1.00 g akt. Masse, 0.25 g Graphit und 0,03 g PTFE gefertigt.

Elektrolyt:     7 m KOH
Ladung:         11 h bei 50 mA
Entladung:      25 mA bis zur Grenzspannung von V vs Hg/HgO bzw. 1 V vs Cd/Cd(OH)$_2$

Das Produkt zeigt bei gleicher Präparationstechnik und unter gleichen Zyklisierungsbedingungen eine deutliche Verbesserung der Zyklenstabilität im Vergleich zu einer Probe von reinem Nickelhydroxid:

Das reine Nickelhydroxid erreicht seine maximale Kapazität schon nach 10 Zyklen, gefolgt von einer kontinuierlichen Abnahme. Dieser Effekt ist bei der mangandotierten Probe erst zwischen 150 bis 200 Zyklen zu beobachten (es wurde durch Austausch des Elektrolyten nachgewiesen, daß bei diesen hohen Zyklenzahlen die Carbonafisierung der Lauge einen deutlichen Beitrag zum Kapazitätsverlust leistet). Die gemessenen Kapazitäten betrugen für die mangandotierte Masse 205 mAh/g im Bereich von Zyklus 100 bis 150, gefolgt von einer geringfügigen Abnahme der Kapazität (198 mAh/g in Zyklus 200).

Auch die Massenausnutzung des Nickels ist im mangandotierten Produkt deutlich gesteigert. Über einen weiten Zyklenbereich können mehr als 90 % des theoretischen Einelektronenschritts von $Ni^{2+}$ nach $Ni^{3+}$ ausgenutzt werden. Das undotierte Nickelhydroxid dagegen liegt mit nur 60%iger Ausnutzung am Maximum der Entladekapazität unter gleichen Versuchsbedingungen deutlich niedriger.

Nach einer Tiefentladung (Zyklus 30) verlor eine mangandotierte Probe ca. 10% Kapazität, bezogen auf den Einelektronenschritt, das Zyklenverhalten zeigte aber keinen Einbruch. Der Wert für die Entladekapazität hielt sich über mehr als 200 Zyklen nahezu konstant unter 75%iger Ausnutzung des Einelektronenschritts.

## Patentansprüche

1. Manganhaltige Nickel(II)hydroxid-Pulver, dadurch gekennzeichnet, daß mehr als 50 Mol.-% des Mangans in der 3-wertigen Oxidationsstufe vorliegen und das 3-wertige Mangan im $Ni(OH)_2$-Gitter eingebaut ist.

2. Nickel(II)hydroxid-Pulver gemäß Anspruch 1, dadurch gekennzeichnet, daß mindestens 80 Mol.-% des Mangans in der 3-wertigen Oxidationsstufe vorliegen.

3. Nickel(II)hydroxid-Pulver gemäß einem der Ansprüche 1 oder 2, dadurch gekennzeichnet, daß mindestens 90 Mol.-% des Mangans in der 3-wertigen Oxidationsstufe vorliegen.

4. Nickel(II)hydroxid-Pulver gemäß einem oder mehreren der Ansprüche 1 bis 3, dadurch gekennzeichnet, daß das Mol-Verhältnis von Ni zu Mn im Bereich von 100 zu 1 bis 1 zu 1 beträgt.

5. Nickel(II)hydroxid-Pulver gemäß einem oder mehreren der Ansprüche 1 bis 4, dadurch gekennzeichnet, daß das Molverhältnis von Nickel zu Mangan im Bereich von 5 zu 1 bis 3 zu 1 beträgt.

6. Nickel(II)hydroxid-Pulver gemäß einem oder mehreren der Ansprüche 1 bis 5, dadurch gekennzeichnet, daß es eines oder mehrere der Elemente aus der Gruppe Cd, Co, Zn, Ca und Mg in einer Höchstgesamtmenge von 8 Mol-%, bezogen auf die Gesamtmenge von Nickel und Mangan, aufweist.

7. Nickel(II)hydroxid-Pulver gemäß einem oder mehreren der Ansprüche 1 bis 6, dadurch gekennzeichnet, daß es eine Partikelgröße von 1 bis 100 $\mu$m aufweist.

8. Verfahren zur Herstellung Mangan(III)-haltiger Nickel(II)hydroxid-Pulver, wobei das 3-wertige Mangan im $Ni(OH)_2$-Gitter eingebaut wird dadurch gekennzeichnet, daß sie aus Nickel(II)- und Mangan(III)-Salzlösungen mit Alkalilaugen kopräzipitiert werden.

9. Verfahren gemäß Anspruch 8, dadurch gekennzeichnet, daß durch Vereinigung von Mangan(II)-Salzlösungen mit entsprechenden Mengen Permanganatlösung oder anderen Oxidationsmitteln wie Peroxodisulfat, $H_2O_2$, Peroxoessigsäure Mangan (III) hergestellt wird.

10. Verfahren gemäß einem oder mehreren der Ansprüche 8 bis 10, dadurch gekennzeichnet, daß die Mangan(III)-Salzlösung stabilisierende Mangan (III) Anionen enthält.

11. Verfahren gemäß einem oder mehreren der Ansprüche 8 bis 11, dadurch gekennzeichnet, daß die Kopräzipitation in Gegenwart von löslichen Salzen von Elementen aus der Gruppe Co, Zn, Cd, Ca und Mg durchgeführt wird.

12. Verwendung von Nickel(II)-hydroxidpulver gemäß einem oder mehreren der Ansprüche 1 bis 7 als Elektrodenmaterial in Sekundärbatterien.

## Claims

1. Nickel(II) hydroxide powders containing manganese, characterised in that more than 50 mol.-% of the manganese is present in the trivalent oxidation state and that the trivalent manganese is incorporated into the $Ni(OH)_2$ lattice.

2. Nickel(II) hydroxide powders according to claim 1, characterised in that at least 80 mol.-% of the manganese is present in the trivalent oxidation state.

3. Nickel(II) hydroxide powders according to either of claims 1 or 2, characterised in that at least 90 mol.-% of the manganese is present in the trivalent oxidation state.

4. Nickel(II) hydroxide powders according to one or more of claims 1 to 3, characterised in that the molar ratio of nickel to manganese is within the range between 100 to 1 and 1 to 1.

5. Nickel(II) hydroxide powders according to one or more of claims 1 to 4, characterised in that the molar ratio of nickel to manganese is within the range between 5 to 1 and 3 to 1.

6. Nickel(II) hydroxide powder according to one or more of claims 1 to 5, characterised in that it contains one or more of the elements from the group Cd, Co, Zn, Ca and Mg in a maximum total quantity of 8 mol-%, referred to the total quantity of nickel and manganese.

7. Nickel(II) hydroxide powder according to one or more of claims 1 to 6, characterised in that it has a particle size of from 1 to 100 $\mu$m.

8. A method for preparing nickel(II) hydroxide powders containing manganese(III), wherein the trivalent manganese is incorporated into the $Ni(OH)_2$ lattice, characterised in that they are coprecipitated from nickel(II) and manganese(III) salt solutions by means of lyes.

9. The method according to claim 8, characterised in that manganese(III) is prepared by combining manganese(II) salt solutions with appropriate quantities of permanganate solution or other oxidising agents such as peroxodisulphate, $H_2O_2$ or peroxyacetic acid.

10. The method according to one or more of claims 8 to 10, characterised in that the manganese(III) salt solution contains stabilising manganese(III) anions.

11. The method according to one or more of claims 8 to 11, characterised in that the coprecipitation is carried out in the presence of soluble salts of elements from the group Co, Zn, Cd, Ca and Mg.

12. The use of nickel(II) hydroxide powder according to one or more of claims 1 to 7 as electrode material in secondary batteries.

## Revendications

1. Poudre d'hydroxyde de nickel(II) contenant du manganèse, caractérisée en ce que plus de 50 moles % du manganèse sont présents au troisième degré d'oxydation et le manganèse trivalent est incorporé dans le réseau de $Ni(OH)_2$.

2. Poudre d'hydroxyde de nickel(II) selon la revendication 1, caractérisée en ce qu'au moins 80 moles % du manganèse sont présents au troisième degré d'oxydation.

3. Poudre d'hydroxyde de nickel(II) selon la revendication 1 ou 2, caractérisée en ce qu'au moins 90 moles % du manganèse sont présents au troisième degré d'oxydation.

4. Poudre d'hydroxyde de nickel(II) selon l'une ou plusieurs des revendications 1 à 3, caractérisée en ce que le rapport molaire du Ni au Mn se situe dans le domaine de 100:1 à 1:1.

5. Poudre d'hydroxyde de nickel(II) selon l'une ou plusieurs des revendications 1 à 4, caractérisée en ce que le rapport molaire du nickel au manganèse se situe dans le domaine de 5:1 à 3:1.

**6.** Poudre d'hydroxyde de nickel(II) selon l'une ou plusieurs des revendications 1 à 5, caractérisée en ce qu'elle présente un ou plusieurs des éléments choisis parmi le groupe comprenant Cd, Co, Zn, Ca et Mg en une quantité totale maximale de 8 moles %, rapportée à la quantité totale du nickel et du manganèse.

**7.** Poudre d'hydroxyde de nickel(II) selon l'une ou plusieurs des revendications 1 à 6, caractérisée en ce qu'elle présente une granulométrie de 1 à 100 $\mu$m.

**8.** Procédé pour la préparation d'une poudre d'hydroxyde de nickel(II) contenant du manganèse(III), dans lequel le manganèse trivalent est incorporé dans le réseau de Ni(OH)$_2$, caractérisé en ce qu'on la soumet à une coprécipitation avec des lessives alcalines dans des solutions de sels de nickel(II) et de manganèse(III).

**9.** Procédé selon la revendication 8, caractérisé en ce qu'on prépare le manganèse(III) en combinant des solutions de sels de manganèse(II) avec des quantités correspondantes d'une solution de permanganate ou d'autres agents d'oxydation tels que le peroxodisulfate, H$_2$O$_2$, l'acide peroxoacétique.

**10.** Procédé selon l'une ou plusieurs des revendications 8 à 9, caractérisé en ce que la solution de sel de manganèse(III) contient des anions stabilisateurs de manganèse(III).

**11.** Procédé selon l'une ou plusieurs des revendications 8 à 10, caractérisé en ce qu'on effectue la coprécipitation en présence de sels solubles des éléments choisis parmi le groupe comprenant Co, Zn, Cd, Ca et Mg.

**12.** Utilisation d'une poudre d'hydroxyde de nickel(II) selon l'une ou plusieurs des revendications 1 à 7, comme matière d'électrode dans des accumulateurs secondaires.